# EUROPEAN PATENT APPLICATION

(11) **EP 3 736 170 A1**
(43) Date of publication of application: **11.11.2020**
(21) Application number: 18898436.3
(22) Date of filing: 03.12.2018
(51) Int. Cl.: B60L 53/80, B60S 5/06, H01M 10/613

(54) **BATTERY REPLACEMENT METHOD FOR ELECTRIC VEHICLE**

(30) Priority: 05.01.2018 CN 201810011940
(71) Applicant: Nio (Anhui) Holding Co., Ltd., Hefei, Anhui 230601 (CN)
(72) Inventor: HAO, Zhanduo, Shanghai 201804 (CN)
(74) Representative: Vossius & Partner Patentanwälte Rechtsanwälte mbB
(86) International application number: PCT/CN2018/118957
(87) International publication number: WO 2019/134471

(57) **Abstract**

A battery swap method for an electric vehicle comprises the following steps: acquiring current liquid level information of a coolant of a vehicle with a battery to be swapped; and matching, according to the current liquid level information, a battery of a corresponding temperature to the vehicle with a battery to be swapped. The method can achieve the purpose of stabilizing the amount of the coolant in the electric vehicle, thereby effectively preventing the problem of the amount of the coolant in the vehicle being too small or too large due to frequent battery swap for the vehicle, eliminating potential safety hazards caused by too much or too little coolant in the vehicle, and ensuring driving safety.

## Description

### Technical Field

The invention relates to the technical field of electric vehicles, and in particular, to a battery swap method for an electric vehicle.

### Background Art

Under the general trend of environmental protection and clean energy concepts, electric vehicles have less impact on the environment than conventional vehicles. This has become the consensus of industry development. The range provided by a traction battery, which serves as a core of an electric vehicle, per charge has always been the bottleneck that disturbs the development of electric vehicles. To reduce users' waiting time for charging, the operation method of quickly swapping traction batteries of electric vehicles is to complete the battery swap in minutes (which is basically the same as the refuelling time of conventional vehicles), so there is no need to change the users' habits of using vehicles.

Under the current battery swap mode, most of the traction batteries use ternary polymer lithium batteries with a high energy density (which can both increase the capacity of the batteries and reduce the weight of the batteries). Such batteries have large internal resistance, which leads to significant heat generation during charging and discharging. Therefore, liquid cooling is often used to control the battery temperature during charging of such batteries. In practical applications, there is a large temperature difference (usually 10°C or above) between the temperature of a liquid-cooled traction battery in an onboard state and the temperature of a traction battery when being fully charged at a battery swap station. During the process of transferring the traction battery between the electric vehicle and the battery swap station, a coolant carried by the traction battery changes slightly under the influence of thermal expansion and contraction. That is, when the temperature of the traction battery rises, the coolant carried by the traction battery expands and overflows; and when the temperature of the traction battery decreases, the coolant carried by the traction battery contracts, thereby introducing an external coolant.

As mentioned above, for an electric vehicle subjected to frequent battery swap, the accumulative transfer of trace amounts of coolant for many times causes a qualitative change from a quantitative change. As a result, the electric vehicle gives an alarm due to too little coolant in winter (in winter, the traction battery of the electric vehicle after swapping is at a decreased temperature, the coolant therein contracts, and the coolant carried by the traction battery increases at the next time of battery swap, that is, during battery swap, the traction battery brings a trace amount of coolant from the vehicle itself to a battery swap station). An alarm is given or even overflow occurs due to too much coolant in summer (in summer, the traction battery of the electric vehicle after swapping is at a raised temperature, the coolant therein expands, and the coolant carried by the traction battery becomes less at the next time of battery swap, that is, during battery swap, the traction battery brings a trace amount of coolant from a battery swap station to the vehicle itself, and there is a risk of overflow when the vehicle itself has too much coolant). Especially after the coolant overflows, if it encounters a high-temperature component in the vehicle, the coolant may be decomposed to generate harmful gases. This seriously affects the health and safety of a driver and passengers.

In view of this, the invention is specially proposed.

### Summary of the Invention

To solve the foregoing problems in the prior art, i.e., to solve the problem in the prior art of a coolant of an electric vehicle being too much or too little in the process of swapping a traction battery of the electric vehicle, the invention provides a battery swap method for an electric vehicle, the battery swap method comprising the following steps: acquiring current liquid level information of a coolant of a vehicle with a battery to be swapped; and matching, according to the current liquid level information, a battery of a corresponding temperature to the vehicle with a battery to be swapped.

In a preferred embodiment of the above battery swap method, before the step of matching, according to the current liquid level information, a battery of a corresponding temperature to the vehicle with a battery to be swapped, the battery swap method further comprises: acquiring a current battery temperature of the vehicle with a battery to be swapped.

In a preferred embodiment of the above battery swap method, the step of matching, according to the current liquid level information, a battery of a corresponding temperature to the vehicle with a battery to be swapped specifically comprises: comparing a current liquid level of the coolant of the vehicle with a battery to be swapped with a standard liquid level of the coolant of the vehicle with a battery to be swapped; and matching, based on the current battery temperature of the vehicle with a battery to be swapped and according to the comparison result, a battery of a corresponding temperature to the vehicle with a battery to be swapped, wherein the standard liquid level is a liquid level of the coolant of the vehicle under a normal operating condition.

In a preferred embodiment of the above battery swap method, the step of matching, based on the current battery temperature of the vehicle with a battery to be swapped and according to the comparison result, a battery of a corresponding temperature to the vehicle with a battery to be swapped specifically comprises: if the current liquid level of the coolant of the vehicle with a battery to be swapped is higher than the standard liquid level, matching, to the vehicle with a battery to be swapped, a battery of a temperature higher than the current battery temperature by a first preset temperature.

In a preferred embodiment of the above battery swap method, the step of matching, based on the current battery temperature of the vehicle with a battery to be swapped and according to the comparison result, a battery of a corresponding temperature to the vehicle with a battery to be swapped specifically comprises: if the current liquid level of the coolant of the vehicle with a battery to be swapped is lower than the standard liquid level, matching, to the vehicle with a battery to be swapped, a battery of a temperature low than the current battery temperature by a second preset temperature.

In a preferred embodiment of the above battery swap method, the step of matching, based on the current battery temperature of the vehicle with a battery to be swapped and according to the comparison result, a battery of a corresponding temperature to the vehicle with a battery to be swapped specifically comprises: if the current liquid level of the coolant of the vehicle with a battery to be swapped is equal to the standard liquid level, matching, to the vehicle with a battery to be swapped, a battery of a temperature equal to the current battery temperature.

In a preferred embodiment of the above battery swap method, the first preset temperature and/or the second preset temperature is 12°C.

In a preferred embodiment of the above battery swap method, the step of matching, based on the current battery temperature of the vehicle with a battery to be swapped and according to the comparison result, a battery of a corresponding temperature to the vehicle with a battery to be swapped further comprises: if none of batteries to be matched meets matching requirements of the vehicle with a battery to be swapped, heating or cooling one selected from the batteries to be matched to meet the matching requirements of the vehicle with a battery to be swapped.

In a preferred embodiment of the above battery swap method, the step of heating or cooling one selected from the batteries to be matched to meet the matching requirements of the vehicle with a battery to be swapped specifically comprises: acquiring the time at which the vehicle with a battery to be swapped arrives at a battery swap location; and heating or cooling, before the vehicle with a battery to be swapped arrives at the battery swap location, the selected battery to be matched to a temperature meeting the matching requirements of the vehicle with a battery to be swapped.

In a preferred embodiment of the above battery swap method, the battery swap method is applied to a battery charging and swap station.

In the technical solutions of the invention, a battery of a corresponding temperature is matched to a vehicle with a battery to be swapped according to the current liquid level of the coolant of the vehicle with a battery to be swapped, and the amount of the coolant in the vehicle with a battery to be swapped is adjusted by using the change in the temperature of the matched battery in the vehicle, so as to achieve the purpose of stabilizing the amount of the coolant in the electric vehicle. The method according to the invention can effectively prevent the problem of the amount of the coolant in the vehicle being too small or too large due to frequent battery swap for the vehicle, eliminate potential safety hazards caused by too much or too little coolant in the vehicle, and ensure driving safety. In addition, the technical solutions of the invention do not increase the complexity of a battery swap station system, and users only need to match a battery of an appropriate temperature to the vehicle with a battery to be swapped. The method is high in feasibility and easy to popularize.

### Brief Description of the Drawings

Fig. 1 is a main flowchart of a battery swap method for an electric vehicle according to the invention; and
Fig. 2 is a detailed flowchart of an embodiment of a battery swap method for an electric vehicle according to the invention.

### Detailed Description of Embodiments

To make the objectives, technical solutions and advantages of the embodiments of the invention clearer, the technical solutions of the invention will be described clearly and completely with reference to the accompanying drawings. Obviously, the embodiments are only some, rather than all of the embodiments of the invention. It should be understood by those skilled in the art that these embodiments are only for explaining the technical principles of the invention and are not intended to limit the scope of protection of the invention. For example, although each step of the method of the invention is described in a specific order in this application, these orders are not to be regarded in a restrictive sense. Without departing from the basic principles of the invention, those skilled in the art may perform the steps in different orders.

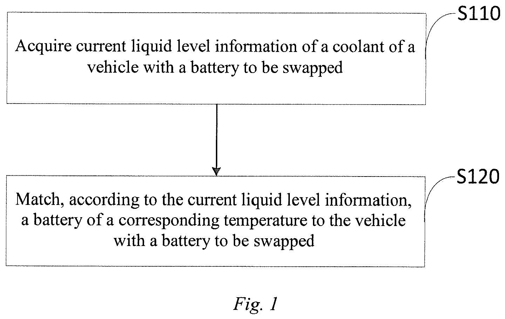

First referring to Fig. 1, Fig. 1 is a main flowchart of a battery swap method for an electric vehicle according to the invention. As shown in Fig. 1, the battery swap method according to the invention comprises the following steps: S110. acquiring current liquid level information of a coolant of a vehicle with a battery to be swapped; and S120. matching, according to the current liquid level information, a battery of a corresponding temperature to the vehicle with a battery to be swapped. In a possible embodiment, a battery swap station is provided with a main control unit. After receiving a battery swapping request from a vehicle with a battery to be swapped, a cloud server sends a current liquid level of a coolant of the vehicle with a battery to be swapped to the main control unit of the battery swap station, and the main control unit matches, according to the current liquid level information, a battery of a corresponding temperature to the vehicle with a battery to be swapped.

As mentioned in the Background Art, during the transfer of a battery between an electric vehicle and a battery swap station, the coolant carried by the battery changes slightly under the influence of thermal expansion and contraction. For an electric vehicle subjected to frequent battery swap, the accumulative transfer of trace amounts of coolant for many times causes a qualitative change from a quantitative change, resulting in too little or too much coolant in the electric vehicle. To maintain the normal amount of the coolant in the electric vehicle, through steps S110 and S120 above, a battery of a corresponding temperature is matched to a vehicle with a battery to be swapped according to the current liquid level of the coolant of the vehicle with a battery to be swapped, and the amount of the coolant in the vehicle with a battery to be swapped is adjusted by using the change in the temperature of the matched battery in the vehicle, so as to achieve the purpose of stabilizing the amount of the coolant in the electric vehicle.

The application of the battery swap method of the invention in a battery swap station is taken as an example below for detailed description.

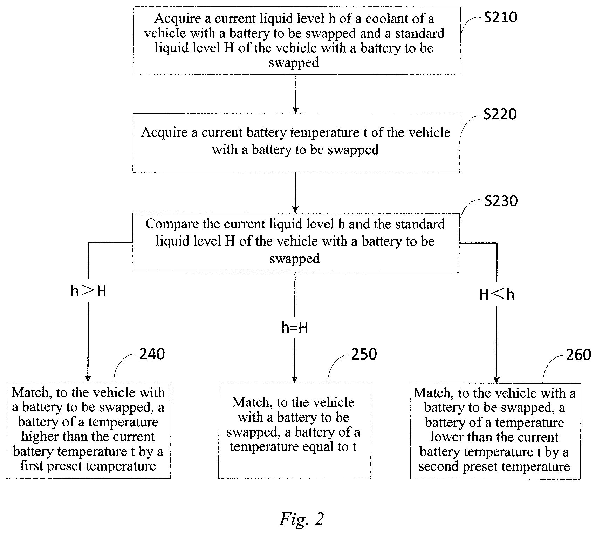

Referring to Fig. 2, Fig. 2 is a detailed flowchart of an embodiment of a battery swap method for an electric vehicle according to the invention. As shown in Fig. 2, step S210 is executed first to acquire a current liquid level h of a coolant of a vehicle with a battery to be swapped and a standard liquid level H of the vehicle with a battery to be swapped. The standard liquid level H is a liquid level of the coolant of the vehicle under a normal condition, which can also be understood as follows: the purpose of matching a battery of a corresponding temperature to the vehicle with a battery to be swapped is to maintain the liquid level of the coolant of the vehicle with a battery to be swapped at the standard liquid level. Then, step S220 is executed to acquire a current battery temperature t of the vehicle with a battery to be swapped; and S230 is executed to compare the current liquid level h and the standard liquid level H of the vehicle with a battery to be swapped.

If h is greater than H, step S240 is executed to match, to the vehicle with a battery to be swapped, a battery of a temperature higher than the current battery temperature t by a first preset temperature. Specifically, if h is greater than H, it indicates that the liquid level of the coolant in the vehicle with a battery to be swapped is relatively high. In this case, the temperature of the battery matched to the vehicle with a battery to be swapped is higher than the current battery temperature t of the vehicle with a battery to be swapped, and therefore the temperature of the battery in the vehicle after swapping decreases. As the temperature decreases, the coolant carried by the battery contracts, and a small amount of coolant in the vehicle is added to the coolant carried by the battery, thereby reducing the amount of the coolant in the vehicle to prevent the coolant in the vehicle from being too much.

In a preferred embodiment, a battery of a temperature higher than the current battery temperature t by 12°C is matched to the vehicle with a battery to be swapped. If none of batteries in the battery swap station meets matching requirements of the vehicle with a battery to be swapped (i.e., the temperature of the batteries to be matched is not t + 12°C), one selected from the batteries to be matched can be heated or cooled such that the temperature thereof reaches t + 12°C at this time. It should be noted that 12°C herein is only used as an example. In theory, it is feasible as long as the temperature of the battery for swapping is higher than the current battery temperature t of the vehicle with a battery to be swapped. In an actual operation, those skilled in the art can swap the battery to be swapped of the vehicle for a battery of an appropriate temperature according to specific experimental data.

If h is equal to H, step S250 is executed to match, to the vehicle with a battery to be swapped, a battery of a temperature equal to t. Specifically, if h is equal to H, it indicates that the liquid level of the coolant in the vehicle with a battery to be swapped is the standard liquid level. That is, the amount of the coolant in the vehicle does not need to be increased or decreased. In this case, the temperature of the battery matched to the vehicle with a battery to be swapped is equal to the current battery temperature t of the vehicle with a battery to be swapped, and therefore the temperature of the battery in the vehicle after swapping does not change, i.e., the amount of the coolant in the vehicle is not affected. In this way, the amount of the coolant in the vehicle is kept unchanged (kept at the standard liquid level). If none of batteries to be matched in the battery swap station meets the matching requirements of the vehicle with a battery to be swapped (i.e., the temperature of the batteries to be matched in the battery swap station is not equal to t), one selected from the batteries to be matched can be heated or cooled such that the temperature thereof reaches t at this time.

If h is less than H, step S260 is executed to match, to the vehicle with a battery to be swapped, a battery of a temperature lower than the current battery temperature t by a second preset temperature. Specifically, if h is less than H, it indicates that the liquid level of the coolant in the vehicle with a battery to be swapped is relatively low. In this case, the temperature of the battery matched to the vehicle with a battery to be swapped is lower than the current battery temperature t of the vehicle with a battery to be swapped, and therefore the temperature of the battery in the vehicle after swap rises. As the temperature rises, the coolant carried by the battery expands and overflows to the coolant in the vehicle, thereby supplementing the coolant in the vehicle to prevent the coolant in the vehicle from being too little.

In a preferred embodiment, a battery of a temperature lower than the current battery temperature t by 12°C is matched to the vehicle with a battery to be swapped. If none of batteries in the battery swap station meets matching requirements of the vehicle with a battery to be swapped (i.e., the temperature of the batteries to be matched is not t - 12°C), one selected from the batteries to be matched can be heated or cooled such that the temperature thereof reaches t - 12°C at this time. It should be noted that 12°C herein is only used as an example. In theory, it is feasible as long as the temperature of the battery for swapping is lower than the current battery temperature t of the vehicle with a battery to be swapped. In an actual operation, those skilled in the art can swap the battery to be swapped of the vehicle for a battery of an appropriate temperature according to specific experimental data.

The term "battery to be matched" hereinabove can be understood as a fully-charged battery in the battery swap station. In a possible embodiment, a liquid cooling apparatus is generally arranged in a battery swap station, and the fully-charged battery in the battery swap station can be kept at a set temperature by the liquid cooling apparatus. In other words, the temperature of the battery to be matched in the battery swap station is a known temperature.

In a preferred embodiment, the battery swap method according to the invention further comprises the following steps: acquiring the time at which the vehicle with a battery to be swapped arrives at a battery swap station if none of batteries to be matched meets the matching requirements of the vehicle with a battery to be swapped; and then heating or cooling, before the vehicle with a battery to be swapped arrives at the battery swap station, the selected battery to be matched to a temperature meeting the matching requirements of the vehicle with a battery to be swapped. For example, if the temperature of the battery to be matched to the vehicle with a battery to be swapped needs to be A while the temperature of the battery to be matched is A + 10°C, the temperature of the battery to be matched needs to be cooled to A. In this case, a main control unit can control, according to the time at which the vehicle with a battery to be swapped reaches the battery swap station, a liquid cooling apparatus to cool the battery to be matched by 10°C by means of different cooling strategies before the time at which the vehicle with a battery to be swapped reaches the battery swap station, thereby reducing the user's waiting time for battery swapping.

In summary, due to the thermal expansion and contraction of the coolant, after the battery is swapped for the vehicle with a battery to be swapped, the temperature change of the battery in the vehicle after swapping affects the amount of the coolant carried by the battery, such as causing the coolant to expand and overflow to the coolant in the vehicle, or causing the coolant to contract to absorb the coolant from the vehicle. Based on the current liquid level of the coolant in the vehicle with a battery to be swapped and the current battery temperature of the vehicle with a battery to be swapped, a battery of an appropriate temperature is matched to the vehicle with a battery to be swapped, such that the amount of the coolant in the vehicle can be adjusted, thereby keeping the coolant in the vehicle at the standard liquid level. Therefore, the problem of the amount of the coolant in the vehicle being too small or too large due to frequent battery swap for the vehicle is effectively prevented, potential safety hazards caused by too much or too little coolant in the vehicle are eliminated, and the driving safety is ensured. In addition, the technical solutions of the invention do not increase the complexity of a battery swap station system, and users only need to match a battery of an appropriate temperature to the vehicle with a battery to be swapped. The method is high in feasibility and easy to popularize.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A battery swap method for an electric vehicle, **characterized by** comprising the following steps:
acquiring current liquid level information of a coolant of a vehicle with a battery to be swapped; and
matching, according to the current liquid level information, a battery of a corresponding temperature to the vehicle with a battery to be swapped.

2. The battery swap method according to claim 1, **characterized in that** before the step of matching, according to the current liquid level information, a battery of a corresponding temperature to the vehicle with a battery to be swapped, the battery swap method further comprises:
acquiring a current battery temperature of the vehicle with a battery to be swapped.

3. The battery swap method according to claim 2, **characterized in that** the step of matching, according to the current liquid level information, a battery of a corresponding temperature to the vehicle with a battery to be swapped specifically comprises:
comparing a current liquid level of the coolant of the vehicle with a battery to be swapped with a standard liquid level of the coolant of the vehicle with a battery to be swapped; and
matching, based on the current battery temperature of the vehicle with a battery to be swapped and according to the comparison result, a battery of a corresponding temperature to the vehicle with a battery to be swapped,
wherein the standard liquid level is a liquid level of the coolant of the vehicle under a normal operating condition.

4. The battery swap method according to claim 3, **characterized in that** the step of matching, based on the current battery temperature of the vehicle with a battery to be swapped and according to the comparison result, a battery of a corresponding temperature to the vehicle with a battery to be swapped specifically comprises:
if the current liquid level of the coolant of the vehicle with a battery to be swapped is higher than the standard liquid level, matching, to the vehicle with a battery to be swapped, a battery of a temperature higher than the current battery temperature by a first preset temperature.

5. The battery swap method according to claim 3, **characterized in that** the step of matching, based on the current battery temperature of the vehicle with a battery to be swapped and according to the comparison result, a battery of a corresponding temperature to the vehicle with a battery to be swapped specifically comprises:
if the current liquid level of the coolant of the vehicle with a battery to be swapped is lower than the standard liquid level, matching, to the vehicle with a battery to be swapped, a battery of a temperature low than the current battery temperature by a second preset temperature.

6. The battery swap method according to claim 3, **characterized in that** the step of matching, based on the current battery temperature of the vehicle with a battery to be swapped and according to the comparison result, a battery of a corresponding temperature to the vehicle with a battery to be swapped specifically comprises:
if the current liquid level of the coolant of the vehicle with a battery to be swapped is equal to the standard liquid level, matching, to the vehicle with a battery to be swapped, a battery of a temperature equal to the current battery temperature.

7. The battery swap method according to claim 4 or 5, **characterized in that** the first preset temperature and/or the second preset temperature is 12°C.

8. The battery swap method according to any one of claims 4 to 6, **characterized in that** the step of matching, based on the current battery temperature of the vehicle with a battery to be swapped and according to the comparison result, a battery of a corresponding temperature to the vehicle with a battery to be swapped further comprises:
if none of batteries to be matched meets matching requirements of the vehicle with a battery to be swapped, heating or cooling one selected from the batteries to be matched to meet the matching requirements of the vehicle with a battery to be swapped.

9. The battery swap method according to claim 8, **characterized in that** the step of heating or cooling one selected from the batteries to be matched to meet the matching requirements of the vehicle with a battery to be swapped specifically comprises:
acquiring the time at which the vehicle with a battery to be swapped arrives at a battery swap location; and
heating or cooling, before the vehicle with a battery to be swapped arrives at the battery swap location, the selected battery to be matched to a temperature meeting the matching requirements of the vehicle with a battery to be swapped.

10. The battery swap method according to claim 9, **characterized in that** the battery swap method is applied to a battery charging and swap station.
